# FASCICULE DE BREVET EUROPEEN

(11) **EP 1 648 719 B1**
(45) Date de publication et mention de la délivrance du brevet: **16.09.2009**
(21) Numéro de dépôt: 04741112.9
(22) Date de dépôt: 16.07.2004
(51) Int. Cl.: B60C 9/22

(54) **PNEUMATIQUE POUR VEHICULES LOURDS**
LKW-REIFEN
TYRE FOR HEAVY VEHICLES

(30) Priorité: 18.07.2003 FR 0308846
(43) Date de publication de la demande: 26.04.2006
(73) Titulaire: Société de Technologie Michelin, F-63000 Clermont-Ferrand (FR); Michelin Recherche et Technique S.A., 1763 Granges-Paccot (CH)
(72) Inventeur: RADULESCU, Robert, Simpsonville, SC 29681 (US); CLUZEL, Guy, F-63110 Beaumont (FR)
(74) Mandataire: Le Cam, Stéphane Georges Elie
(86) Numéro de dépôt international: PCT/EP2004/007992
(87) Numéro de publication internationale: WO 2005/016668

(56) Documents cités:
- EP-A- 0 980 770
- FR-A- 2 770 457
- FR-A- 2 770 458
- US-A- 5 996 662
- US-B1- 6 367 527
- PATENT ABSTRACTS OF JAPAN vol. 1998, no. 14, 31 décembre 1998 (1998-12-31) -& JP 10 250316 A (BRIDGESTONE CORP), 22 septembre 1998 (1998-09-22)

## Description

La présente invention concerne un pneumatique, à armature de carcasse radiale et plus particulièrement un pneumatique destiné à équiper des véhicules portant de lourdes charges et roulant à vitesse soutenue, tels que, par exemple les camions, tracteurs, remorques ou bus routiers.

L'armature de renforcement ou renforcement des pneumatiques et notamment des pneumatiques de véhicules de type poids-lourds est à l'heure actuelle - et le plus souvent - constituée par empilage d'une ou plusieurs nappes désignées classiquement « nappes de carcasse », «nappes sommet », etc. Cette façon de désigner les armatures de renforcement provient du procédé de fabrication, consistant à réaliser une série de produits semi-finis en forme de nappes, pourvues de renforts filaires souvent longitudinaux, qui sont par la suite assemblées ou empilées afin de confectionner une ébauche de pneumatique. Les nappes sont réalisées à plat, avec des dimensions importantes, et sont par la suite coupées en fonction des dimensions d'un produit donné. L'assemblage des nappes est également réalisé, dans un premier temps, sensiblement à plat. L'ébauche ainsi réalisée est ensuite mise en forme pour adopter le profil toroïdal typique des pneumatiques. Les produits semi-finis dits « de finition » sont ensuite appliqués sur l'ébauche, pour obtenir un produit prêt pour la vulcanisation.

Un tel type de procédé "classique" implique, en particulier pour la phase de fabrication de l'ébauche du pneumatique, l'utilisation d'un élément d'ancrage (généralement une tringle), utilisé pour réaliser l'ancrage ou le maintien de l'armature de carcasse dans la zone des bourrelets du pneumatique. Ainsi, pour ce type de procédé, on effectue un retournement d'une portion de toutes les nappes composant l'armature de carcasse (ou d'une partie seulement) autour d'une tringle disposée dans le bourrelet du pneumatique. On crée de la sorte un ancrage de l'armature de carcasse dans le bourrelet.

La généralisation dans l'industrie de ce type de procédé classique, malgré de nombreuses variantes dans la façon de réaliser les nappes et les assemblages, a conduit l'homme du métier à utiliser un vocabulaire calqué sur le procédé ; d'où la terminologie généralement admise, comportant notamment les termes «nappes», «carcasse», «tringle», «conformation» pour désigner le passage d'un profil plat à un profil toroïdal, etc.

Il existe aujourd'hui des pneumatiques qui ne comportent à proprement parler pas de «nappes» ou de «tringles» d'après les définitions précédentes. Par exemple, le document EP 0 582 196 décrit des pneumatiques fabriqués sans l'aide de produits semi-finis sous forme de nappes. Par exemple, les éléments de renforcement des différentes structurés de renfort sont appliqués directement sur les couches adjacentes de mélanges caoutchouteux, le tout étant appliqué par couches successives sur un noyau toroïdal dont la forme permet d'obtenir directement un profil s'apparentant au profil final du pneumatique en cours de fabrication. Ainsi, dans ce cas, on ne retrouve plus de «semi-finis», ni de «nappe», ni de «tringle». Les produits de base tels les mélanges caoutchouteux et les éléments de renforcement sous forme de fils ou filaments, sont directement appliqués sur le noyau. Ce noyau étant de forme toroïdale, on n'a plus à former l'ébauche pour passer d'un profil plat à un profil sous forme de tore.

Par ailleurs, les pneumatiques décrits dans ce document ne disposent pas du "traditionnel" retournement de nappe carcasse autour d'une tringle. Ce type d'ancrage est remplacé par un agencement dans lequel on dispose de façon adjacente à ladite structure de renfort de flanc des fils circonférentiels, le tout étant noyé dans un mélange caoutchouteux d'ancrage ou de liaison.

Il existe également des procédés d'assemblage sur noyau toroïdal utilisant des produits semi-finis spécialement adaptés pour une pose rapide, efficace et simple sur un noyau central. Enfin, il est également possible d'utiliser un mixte comportant à la fois certains produits semi-finis pour réaliser certains aspects architecturaux (tels que des nappes, tringles, etc), tandis que d'autres sont réalisés à partir de l'application directe de mélanges et/ou d'élément de renforcement.

Dans le présent document, afin de tenir compte des évolutions technologiques récentes tant dans le domaine de la fabrication que pour la conception de produits, les termes classiques tels que «nappes», «tringles», etc., sont avantageusement remplacés par des termes neutres ou indépendants du type de procédé utilisé. Ainsi, le terme «renfort de type carcasse» ou «renfort de flanc» est valable pour désigner les éléments de renforcement d'une nappe carcasse dans le procédé classique, et les éléments de renforcement correspondants, en général appliqués au niveau des flancs, d'un pneumatique produit selon un procédé sans semi-finis. Le terme «zone d'ancrage» pour sa part, peut désigner tout autant le "traditionnel" retournement de nappe carcasse autour d'une tringle d'un procédé classique, que l'ensemble formé par les éléments de renforcement circonférentiels, le mélange caoutchouteux et les portions adjacentes de renfort de flanc d'une zone basse réalisée avec un procédé avec application sur un noyau toroïdal.

D'une manière générale dans les pneumatiques de type poids-lourds, l'armature de carcasse est ancrée de part et d'autre dans la zone du bourrelet et est surmontée radialement par une armature de sommet constituée d'au moins deux couches, superposées et formées de fils ou câbles parallèles dans chaque couche. Elle peut également comprendre une couche de fils ou câbles métalliques à faible extensibilité faisant avec la direction circonférentielle un angle compris entre 45° et 90°, cette nappe, dite de triangulation, étant radialement située entre l'armature de carcasse et la première nappe de sommet dite de travail, formées de fils ou câbles parallèles présentant des angles au plus égaux à 45° en valeur absolue. La nappe de triangulation forme avec au moins ladite nappe de travail une armature triangulée, qui présente, sous les différentes contraintes qu'elle subit, peu de déformations, la nappe de triangulation ayant pour rôle essentiel de reprendre les efforts de compression transversale dont est l'objet l'ensemble des éléments de renforcement dans la zone du sommet du pneumatique.

L'armature de sommet comprend au moins une couche de travail ; lorsque ladite armature de sommet comporte au moins deux couches de travail, celles-ci sont formées d'éléments de renforcement métalliques inextensibles, parallèles entre eux dans chaque couche et croisés d'une couche à la suivante en faisant avec la direction circonférentielle des angles compris entre 10° et 45°. Lesdites couches de travail, formant l'armature de travail, peuvent encore être recouvertes d'au moins une couche dite de protection et formée d'éléments de renforcement avantageusement métalliques et extensibles, dits élastiques.

Dans le cas des pneumatiques pour véhicules "Poids-Lourds", une seule couche de protection est habituellement présente et ses éléments de protection sont, dans la plupart des cas, orientés dans la même direction et avec le même angle en valeur absolue que ceux des éléments de renforcement de la couche de travail radialement la plus à l'extérieur et donc radialement adjacente. Dans le cas de pneumatiques de Génie Civil destinés aux roulages sur sols plus ou moins accidentés, la présence de deux couches de protection est avantageuse, les éléments de renforcement étant croisés d'une couche à la suivante et les éléments de renforcement de la couche de protection radialement intérieure étant croisés avec les éléments de renforcement inextensibles de la couche de travail radialement extérieure et adjacente à ladite couche de protection radialement intérieure.

Des câbles sont dits inextensibles lorsque lesdits câbles présentent sous une force de traction égale à 10% de la force de rupture un allongement relatif au plus égal à 0,2%.

Des câbles sont dits élastiques lorsque lesdits câbles présentent sous une force de traction égale à la charge de rupture un allongement relatif au moins égal à 4%.

La direction circonférentielle du pneumatique, ou direction longitudinale, est la direction correspondant à la périphérie du pneumatique et définie par la direction de roulement du pneumatique.

La direction transversale ou axiale du pneumatique est parallèle à l'axe de rotation du pneumatique.

La direction radiale est une direction coupant l'axe de rotation du pneumatique et perpendiculaire à celui-ci.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

Certains pneumatiques actuels, dits "routiers", notamment dont le rapport d'aspect H/S est supérieur à 0,50, sont destinés à rouler à grande vitesse et sur des trajets de plus en plus longs, du fait de l'amélioration du réseau routier et de la croissance du réseau autoroutier dans le monde. L'ensemble des conditions, sous lesquelles un tel pneumatique est appelé à rouler, permet sans aucun doute un accroissement du nombre de kilomètres parcourus, l'usure du pneumatique étant moindre ; par contre l'endurance de ce dernier et en particulier de l'armature de sommet est pénalisée.

Il existe en effet des contraintes au niveau de l'armature de sommet et plus particulièrement des contraintes de cisaillement entre les couches de sommet, alliées à une élévation non négligeable de la température de fonctionnement au niveau des extrémités de la couche de sommet axialement la plus courte, qui ont pour conséquence l'apparition et la propagation de fissures de la gomme au niveau desdites extrémités. Le même problème existe dans le cas de bords de deux couches à éléments de renforcement, ladite autre couche n'étant pas obligatoirement radialement adjacente à la première.

Afin d'améliorer l'endurance de l'armature de sommet du type de pneumatique étudié, des solutions relatives à la structure et qualité des couches et/ou profilés de mélanges caoutchouteux qui sont disposés entre et/ou autour des extrémités de nappes et plus particulièrement des extrémités de la nappe axialement la plus courte ont déjà été apportées.

Le brevet FR 1 389 428, pour améliorer la résistance à la dégradation des mélanges de caoutchouc situés au voisinage des bords d'armature de sommet, préconise l'utilisation, en combinaison avec une bande de roulement de faible hystérésis, d'un profilé de caoutchouc couvrant au moins les côtés et les bords marginaux de l'armature de sommet et constitué d'un mélange caoutchouteux à faible hystérésis.

Le brevet FR 2 222 232, pour éviter les séparations entre nappes d'armature de sommet, enseigne d'enrober les extrémités de l'armature dans un matelas de caoutchouc, dont la dureté Shore A est différente de celle de la bande de roulement surmontant ladite armature, et plus grande que la dureté Shore A du profilé de mélange caoutchouteux disposé entre les bords de nappes d'armature de sommet et armature de carcasse.

La demande française FR 2 728 510 propose de disposer, d'une part entre l'armature de carcasse et la nappe de travail d'armature de sommet, radialement la plus proche de l'axe de rotation, une nappe axialement continue, formée de câbles métalliques inextensibles faisant avec la direction circonférentielle un angle au moins égal à 60°, et dont la largeur axiale est au moins égale à la largeur axiale de la nappe de sommet de travail la plus courte, et d'autre part entre les deux nappes de sommet de travail une nappe additionnelle formée d'éléments métalliques, orientés sensiblement parallèlement à la direction circonférentielle.

Le brevet US 6,367,527 décrit un pneumatique ayant les caractéristiques techniques mentionnées dans le préambule de la revendication 1.

La demande de brevet JP 10250316 décrit un pneumatique présentant un profil de la bande de roulement et des rainures autorisant une usure plus régulière du pneumatique et une amélioration de la résistance au roulement dudit pneumatique. Le rapport de la largeur axiale de la bande de roulement sur la largeur axiale maximale du pneumatique peut varier de 10 à 95%.

La demande française FR 2 770 457 décrit un pneumatique comportant au moins deux nappes de sommet de travail en câbles inextensibles, croisés d'une nappe à l'autre,et comportant une nappe additionnelle formée d'éléments métalliques ondulés, orientés sensiblement parallèlement à la direction circonférentielle.

Les roulages prolongés dans des conditions particulièrement sévères des pneumatiques ainsi construits ont fait apparaître des limites en termes d'endurance de ces pneumatiques.

Pour remédier à de tels inconvénients et améliorer l'endurance de l'armature de sommet de ces pneumatiques, la demande française WO 99/24269 propose, de part et d'autre du plan équatorial et dans le prolongement axial immédiat de la nappe additionnelle d'éléments de renforcement sensiblement parallèles à la direction circonférentielle, de coupler, sur une certaine distance axiale, les deux nappes de sommet de travail formées d'éléments de renforcement croisés d'une nappe à la suivante pour ensuite les découpler par des profilés de mélange de caoutchouc au moins sur le restant de la largeur commune aux dites deux nappes de travail.

Un but de l'invention est de fournir des pneumatiques pour véhicules "Poids-Lourds", dont les performances d'endurance et d'usure sont encore améliorées par rapport aux pneumatiques usuels.

Ce but est atteint selon l'invention par un pneumatique, pour véhicules "Poids-Lourds" à armature de carcasse radiale comprenant une armature de sommet formée d'au moins deux couches de sommet de travail d'éléments de renforcement inextensibles, croisés d'une couche à l'autre en faisant avec la direction circonférentielle des angles compris entre 10° et 45°, elle-même coiffée radialement d'une bande de roulement, ladite bande de roulement étant réunie à deux bourrelets par l'intermédiaire de deux flancs, l'armature de sommet comportant au moins une couche d'éléments de renforcement circonférentiels de largeur axiale inférieure à celle d'au moins une des couches de sommet de travail, le rapport de la largeur axiale d'au moins une couche d'éléments de renforcement circonférentiels sur la largeur axiale de la bande de roulement étant supérieur à 0,6, de préférence supérieur à 0,65 et le rapport de la largeur axiale de la bande de roulement sur la largeur axiale maximale du pneumatique étant strictement supérieur à 0,89.

L'invention concerne plus particulièrement un pneumatique du type "Poids-Lourds", dont le rapport de la hauteur sur jante H sur sa largeur axiale maximale S, ou rapport de forme, est strictement supérieur à 0,50.

Le rapport d'aspect H/S est le rapport de la hauteur H du pneumatique sur jante sur la largeur axiale maximale S du pneumatique, lorsque ce dernier est monté sur sa jante de service et gonflé à sa pression nominale. La hauteur H, est définie comme la différence entre le rayon maximal de la bande de roulement et le rayon minimal du bourrelet.

Les largeurs axiales des couches d'éléments de renforcement sont mesurées sur une coupe transversale d'un pneumatique, le pneumatique étant donc dans un état non gonflé.

La largeur axiale de la bande de roulement est mesurée entre deux extrémités d'épaulement lorsque le pneumatique est monté sur sa jante de service et gonflé à sa pression nominale.

Une extrémité d'épaulement est définie, dans la zone de l'épaule du pneumatique, par la projection orthogonale sur la surface extérieure du pneumatique de l'intersection des tangentes aux surfaces d'une extrémité axialement extérieure de la bande de roulement (sommet des sculptures) d'une part et de l'extrémité radialement extérieure d'un flanc d'autre part.

Des éléments de renforcement circonférentiels sont des éléments de renforcement qui font avec la direction circonférentielle des angles compris dans l'intervalle + 2,5°, - 2,5° autour de 0°.

La couche d'éléments de renforcement circonférentiels selon l'invention est avantageusement une couche continue sur toute sa largeur axiale.

Comparé à un pneumatique usuel de même dimension, le pneumatique selon l'invention présente une largeur axiale de la bande de roulement plus importante associée à une couche d'éléments de renforcement circonférentiels, dont la largeur satisfait la relation énoncée ci-dessus, qui confèrent notamment un meilleur rendement en terme de durée de vie sur usure et améliorent les performances en terme d'endurance.

La présence dans le pneumatique selon l'invention d'une couche d'éléments de renforcement circonférentiels dont la largeur satisfait la relation ci-dessus autorise notamment une diminution des contraintes de cisaillement entre les couches de travail et donc améliore de ce fait les performances d'endurance du pneumatique.

Un tel mode de réalisation autorise en outre une meilleure rigidité des épaules du pneumatique et est donc favorable à une diminution des risques d'usure irrégulière de la bande de roulement qui augmentent lorsque le rapport de forme des pneumatiques diminue.

Par ailleurs, les roulages effectués avec de tels pneumatiques satisfaisant les critères de l'invention ont montré que les éléments de renforcement circonférentiels ne présentent pas de rupture y compris aux extrémités de la couche d'éléments de renforcement circonférentiels.

L'invention prévoit avantageusement qu'au moins une couche constituant l'architecture sommet est présente radialement sous le « rib », ou sculpture d'orientation principale longitudinale, axialement le plus à l'extérieur. Cette réalisation permet comme énoncé précédemment de renforcer la rigidité de ladite sculpture. Avantageusement encore, la couche d'éléments de renforcement circonférentiels est présente radialement sous le « rib », ou sculpture d'orientation principale longitudinale, axialement le plus à l'extérieur.

Selon une réalisation préférée de l'invention, la différence entre la largeur axiale de la couche de sommet de travail axialement la plus large et la largeur axiale de la couche de sommet de travail axialement la moins large est comprise entre 10 et 30 mm.

De préférence encore, la couche de sommet de travail axialement la plus large est radialement à l'intérieur des autres couches de sommet de travail.

Selon un mode de réalisation avantageux de l'invention, les éléments de renforcement d'au moins une couche d'éléments de renforcement circonférentiels sont des éléments de renforcement métalliques présentant un module sécant à 0,7 % d'allongement compris entre 10 et 120 GPa et un module tangent maximum inférieur à 150 GPa.

Selon une réalisation préférée, le module sécant des éléments de renforcement à 0,7 % d'allongement est inférieur à 100 Gpa et supérieur à 20 GPa, de préférence compris entre 30 et 90 GPa et de préférence encore inférieur à 80 GPa.

De préférence également, le module tangent maximum des éléments de renforcement est inférieur à 130 GPa et de préférence encore inférieur à 120 GPa.

Les modules exprimés ci-dessus sont mesurés sur une courbe contrainte de traction en fonction de l'allongement déterminée avec une précontrainte de 20 MPa ramenée à la section de métal de l'élément de renforcement, la contrainte de traction correspondant à une tension mesurée ramenée à la section de métal de l'élément de renforcement.

Les modules des mêmes éléments de renforcement peuvent être mesurés sur une courbe contrainte de traction en fonction de l'allongement déterminée avec une précontrainte de 10 MPa ramenée à la section globale de l'élément de renforcement, la contrainte de traction correspondant à une tension mesurée ramenée à la section globale de l'élément de renforcement. La section globale de l'élément de renforcement est la section d'un élément composite constitué de métal et de caoutchouc, ce dernier ayant notamment pénétré l'élément de renforcement pendant la phase de cuisson du pneumatique.

Selon cette formulation relative à la section globale de l'élément de renforcement, les éléments de renforcement d'au moins une couche d'éléments de renforcement circonférentiels sont des éléments de renforcement métalliques présentant un module sécant à 0,7 % d'allongement compris entre 5 et 60 GPa et un module tangent maximum inférieur à 75 GPa.

Selon une réalisation préférée, le module sécant des éléments de renforcement à 0,7 % d'allongement est inférieur à 50 Gpa et supérieur à 10 GPa, de préférence compris entre 15 et 45 GPa et de préférence encore inférieure à 40 GPa.

De préférence également, le module tangent maximum des éléments de renforcement est inférieur à 65 GPa et de préférence encore inférieur à 60 GPa.

Selon un mode de réalisation préféré, les éléments de renforcements d'au moins une couche d'éléments de renforcement circonférentiels sont des éléments de renforcement métalliques présentant une courbe contrainte de traction en fonction de l'allongement relatif ayant des faibles pentes pour les faibles allongements et une pente sensiblement constante et forte pour les allongements supérieurs. De tels éléments de renforcement de la nappe additionnelle sont habituellement dénommés éléments "bi-module".

Selon une réalisation préférée de l'invention, la pente sensiblement constante et forte apparaît à partir d'un allongement relatif compris entre 0,1% et 0,5%.

Les différentes caractéristiques des éléments de renforcement énoncées ci-dessus sont mesurées sur des éléments de renforcement prélevés sur des pneumatiques.

Des éléments de renforcement plus particulièrement adaptés à la réalisation d'au moins une couche d'éléments de renforcement circonférentiels selon l'invention sont par exemple des assemblages de formule 21.23, dont la construction est 3x(0.26+6x0.23) 4.4/6.6 SS ; ce câble à torons est constitué de 21 fils élémentaires de formule 3 x (1+6), avec 3 torons tordus ensembles chacun constitué de 7 fils, un fil formant une âme centrale de diamètre égal à 26/100 mm et 6 fils enroulés de diamètre égal à 23/100 mm. Un tel câble présente un module sécant à 0,7% égal à 45 GPa et un module tangent maximum égal à 98 GPa, mesurés sur une courbe contrainte de traction en fonction de l'allongement déterminée avec une précontrainte de 20 MPa ramenée à la section de métal de l'élément de renforcement, la contrainte de traction correspondant à une tension mesurée ramenée à la section de métal de l'élément de renforcement. Sur une courbe contrainte de traction en fonction de l'allongement déterminée avec une précontrainte de 10 MPa ramenée à la section globale de l'élément de renforcement, la contrainte de traction correspondant à une tension mesurée ramenée à la section globale de l'élément de renforcement, ce câble de formule 21.23 présente un module sécant à 0,7% égal à 23 GPa et un module tangent maximum égal à 49 GPa.

De la même façon, un autre exemple d'éléments de renforcement est un assemblage de formule 21.28, dont la construction est 3x(0.32+6x0.28) 6.2/9.3 SS. Ce câble présente un module sécant à 0,7% égal à 56 GPa et un module tangent maximum égal à 102 GPa, mesurés sur une courbe contrainte de traction en fonction de l'allongement déterminée avec une précontrainte de 20 MPa ramenée à la section de métal de l'élément de renforcement, la contrainte de traction correspondant à une tension mesurée ramenée à la section de métal de l'élément de renforcement. Sur une courbe contrainte de traction en fonction de l'allongement déterminée avec une précontrainte de 10 MPa ramenée à la section globale de l'élément de renforcement, la contrainte de traction correspondant à une tension mesurée ramenée à la section globale de l'élément de renforcement, ce câble de formule 21.28 présente un module sécant à 0,7% égal à 27 GPa et un module tangent maximum égal à 49 GPa.

L'utilisation de tels éléments de renforcement dans au moins une couche d'éléments de renforcement circonférentiels permettent notamment de conserver des rigidités de la couche satisfaisante y compris après les étapes de conformation et de cuisson dans des procédés de fabrication usuels.

Selon un deuxième mode de réalisation de l'invention, les éléments de renforcement circonférentiels peuvent être formées d'éléments métalliques inextensibles et coupés de manière à former des tronçons de longueur très inférieure à la circonférence de la couche la moins longue, mais préférentiellement supérieure à 0,1 fois ladite circonférence, les coupures entre tronçons étant axialement décalées les unes par rapport aux autres. De préférence encore, le module d'élasticité à la traction par unité de largeur de la couche additionnelle est inférieur au module d'élasticité à la traction, mesuré dans les mêmes conditions, de la couche de sommet de travail la plus extensible. Un tel mode de réalisation permet de conférer, de manière simple, à la couche d'éléments de renforcement circonférentiels un module pouvant facilement être ajusté (par le choix des intervalles entre tronçons d'une même rangée), mais dans tous les cas plus faible que le module de la couche constituée des mêmes éléments métalliques mais continus, le module de la couche additionnelle étant mesuré sur une couche vulcanisée d'éléments coupés, prélevée sur le pneumatique.

Selon un troisième mode de réalisation de l'invention, les éléments de renforcement circonférentiels sont des éléments métalliques ondulés, le rapport a/λ de l'amplitude d'ondulation sur la longueur d'onde étant au plus égale à 0,09. De préférence, le module d'élasticité à la traction par unité de largeur de la couche additionnelle est inférieur au module d'élasticité à la traction, mesuré dans les mêmes conditions, de la couche de sommet de travail la plus extensible

Les éléments métalliques sont préférentiellement des câbles d'acier.

Selon une variante de réalisation de l'invention, au moins une couche d'éléments de renforcement circonférentiels est disposée radialement entre deux couches de sommet de travail.

Selon cette dernière variante de réalisation, la couche d'éléments de renforcement circonférentiels permet de limiter de manière plus importante les mises en compression des éléments de renforcement de l'armature de carcasse qu'une couche semblable mise en place radialement à l'extérieur des couches de travail. Elle est préférablement radialement séparée de l'armature de carcasse par au moins une couche de travail de façon à limiter les sollicitations desdits éléments de renforcement et ne pas trop les fatiguer.

Avantageusement encore dans le cas d'une couche d'éléments de renforcement circonférentiels disposée radialement entre deux couches de sommet de travail, les largeurs axiales des couches de sommet de travail radialement adjacentes à la couche d'éléments de renforcement circonférentiels sont supérieures à la largeur axiale de ladite couche d'éléments de renforcement circonférentiels et de préférence, lesdites couches de sommet de travail adjacentes à la couche d'éléments de renforcement circonférentiels sont de part et d'autre du plan équatorial et dans le prolongement axial immédiat de la couche d'éléments de renforcement circonférentiels couplées sur une largeur axiale, pour être ensuite découplées par des profilés de mélange de caoutchouc au moins sur le restant de la largeur commune aux dites deux couches de travail.

La présence de tels couplages entre les couches de sommet de travail adjacentes à la couche d'éléments de renforcement circonférentiels permettent encore la diminution des contraintes de tension agissant sur les éléments circonférentiels axialement le plus à l'extérieur et situé le plus près du couplage.

L'épaisseur des profilés de découplage entre nappes de travail, mesurée au droit des extrémités de la nappe de travail la moins large, sera au moins égale à deux millimètres, et préférentiellement supérieure à 2,5 mm.

Il faut entendre par nappes couplées des nappes dont les éléments de renforcement respectifs sont séparés radialement d'au plus 1,5 mm, ladite épaisseur de caoutchouc étant mesurée radialement entre les génératrices respectivement supérieure et inférieure desdits éléments de renforcement.

L'invention prévoit encore avantageusement pour diminuer les contraintes de tension agissant sur les éléments circonférentiels axialement le plus à l'extérieur que l'angle formé avec la direction circonférentielle par les éléments de renforcement des couches de sommet de travail est inférieur à 30° et de préférence inférieur à 25°.

Selon une autre variante avantageuse de l'invention, les couches de sommet de travail comportent des éléments de renforcement, croisés d'une nappe à l'autre, faisant avec la direction circonférentielle des angles variables selon la direction axiale, lesdits angles étant supérieurs sur les bords axialement extérieurs des couches d'éléments de renforcement par rapport aux angles desdits éléments mesurés au niveau du plan médian circonférentiel. Une telle réalisation de l'invention permet d'augmenter la rigidité circonférentielle dans certaines zones et au contraire de la diminuer dans d'autres, notamment pour diminuer les mises en compression de l'armature de carcasse.

Une réalisation préférée de l'invention prévoit encore que l'armature de sommet est complétée radialement à l'extérieur par au moins une couche supplémentaire, dite de protection, d'éléments de renforcement dits élastiques, orientés par rapport à la direction circonférentielle avec un angle compris entre 10° et 45° et de même sens que l'angle formé par les éléments inextensibles de la couche de travail qui lui est radialement adjacente.

La couche de protection peut avoir une largeur axiale inférieure à la largeur axiale de la couche de travail la moins large. Ladite couche de protection peut aussi avoir une largeur axiale supérieure à la largeur axiale de la couche de travail la moins large, telle qu'elle recouvre les bords de la couche de travail la moins large et, dans le cas de la couche radialement supérieure comme étant le moins large, telle qu'elle soit couplée, dans le prolongement axial de l'armature additionnelle, avec la couche de sommet de travail la plus large sur une largeur axiale, pour être ensuite, axialement à l'extérieur, découplée de ladite couche de travail la plus large par des profilés d'épaisseur au moins égale à 2 mm. La couche de protection formée d'éléments de renforcement élastiques peut, dans le cas cité ci-dessus, être d'une part éventuellement découplée des bords de ladite couche de travail la moins large par des profilés d'épaisseur sensiblement moindre que l'épaisseur des profilés séparant les bords des deux couches de travail, et avoir d'autre part une largeur axiale inférieure ou supérieure à la largeur axiale de la couche de sommet la plus large.

Selon l'un quelconque des modes de réalisation de l'invention évoqué précédemment, l'armature de sommet peut encore être complétée, radialement à l'intérieur entre l'armature de carcasse et la couche de travail radialement intérieure la plus proche de ladite armature de carcasse, par une couche de triangulation d'éléments de renforcement inextensibles métalliques en acier faisant, avec la direction circonférentielle, un angle supérieur à 60° et de même sens que celui de l'angle formé par les éléments de renforcement de la couche radialement la plus proche de l'armature de carcasse.

D'autres détails et caractéristiques avantageux de l'invention ressortiront ci-après de la description des exemples de réalisation de l'invention en référence aux figures 1 à 5 qui représentent :
- figure 1, une vue méridienne d'un schéma d'un pneumatique selon un mode de réalisation de l'invention,
- figure 2, une vue méridienne d'un schéma d'un pneumatique selon un deuxième mode de réalisation de l'invention,
- figure 3, une vue méridienne d'un schéma d'un pneumatique selon un troisième mode de réalisation de l'invention,
- figure 4, une vue méridienne d'un schéma d'un pneumatique selon un quatrième mode de réalisation de l'invention
- figure 5, une vue méridienne d'un schéma d'un pneumatique illustrant la détermination d'une extrémité d'épaulement.

Les figures ne sont pas représentées à l'échelle pour en simplifier la compréhension. Les figures ne représentent qu'une demi-vue d'un pneumatique qui se prolonge de manière symétrique par rapport à l'axe XX' qui représente le plan médian circonférentiel, ou plan équatorial, d'un pneumatique.

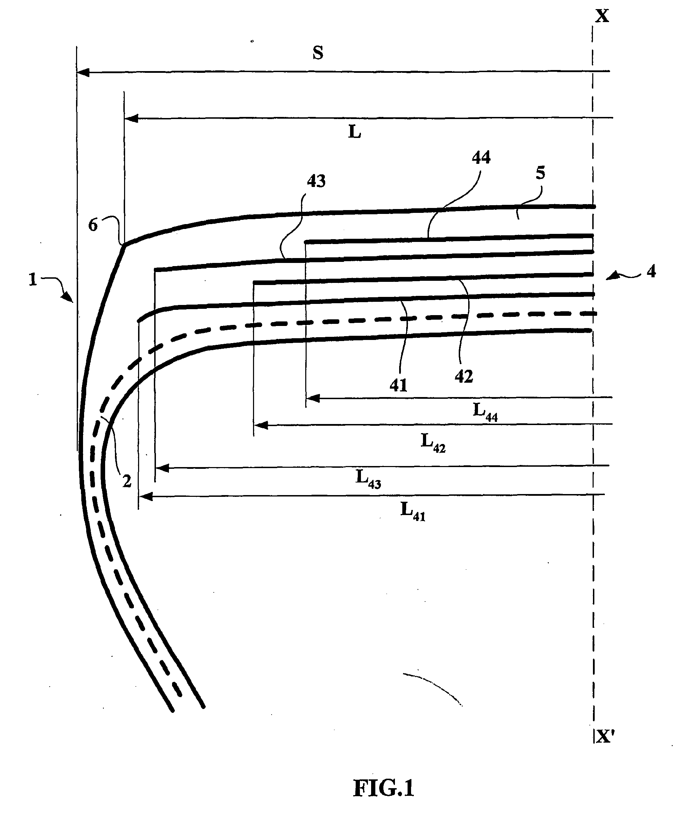

Sur la figure 1, le pneumatique 1, de dimension 315/70 R 22.5 X, a un rapport de forme H/S égal à 0,70, H étant la hauteur du pneumatique 1 sur sa jante de montage et S sa largeur axiale maximale. Ledit pneumatique 1 comprend une armature de carcasse radiale 2 ancrée dans deux bourrelets, non représentés sur la figure. L'armature de carcasse est formée d'une seule couche de câbles métalliques. Cette armature de carcasse 2 est frettée par une armature de sommet 4, formée radialement de l'intérieur à l'extérieur :
- d'une première couche de travail 41 formée de câbles métalliques inextensibles 11.35 non frettés, continus sur toute la largeur de la nappe, orientés d'un angle égal à 22°,
- d'une couche d'éléments de renforcement circonférentiels 42 formée de câbles métalliques en acier 21x23, de type "bi-module",
- d'une seconde couche de travail 43 formée de câbles métalliques inextensibles 11.35 non frettés, continus sur toute la largeur de la nappe, orientés d'un angle égal à 26° et croisés aux câbles métalliques de la couche 41,
- d'une couche de protection 44 formées de câbles métalliques élastiques 18x23.

L'armature de sommet est elle-même coiffée d'une bande de roulement 5.

La largeur axiale L₄₁ de la première couche de travail 41 est égale à 270 mm, ce qui est, pour un pneumatique de forme usuelle, sensiblement inférieur à la largeur L de la bande de roulement, qui est égale, dans le cas étudié, à 292 mm.

La largeur axiale L₄₃ de la deuxième couche de travail 43 est égale à 250 mm. La différence entre les largeurs L₄₁ et L₄₃ est égale à 20 mm et en conséquence comprise entre 10 et 30 mm conformément à l'invention.

Quant à la largeur axiale globale L₄₂ de la couche d'éléments de renforcement circonférentiels 42, elle est égale à 210 mm. Le rapport de la largeur L₄₂ sur la largeur de la bande de roulement est égal à 0,72 et donc bien supérieur à 0,6.

La dernière nappe de sommet 44, dite de protection, a une largeur L₄₄ égale à 210 mm.

Conformément à l'invention, sur l'ensemble de la largeur de la couche d'éléments de renforcement 42, l'ensemble des couches de l'armature de sommet présente un rayon de courbure quasi-infini. Les éléments de renforcement orientés circonférentiellement sont selon cette configuration moins sensibles aux risques de rupture notamment aux extrémités axialement extérieures.

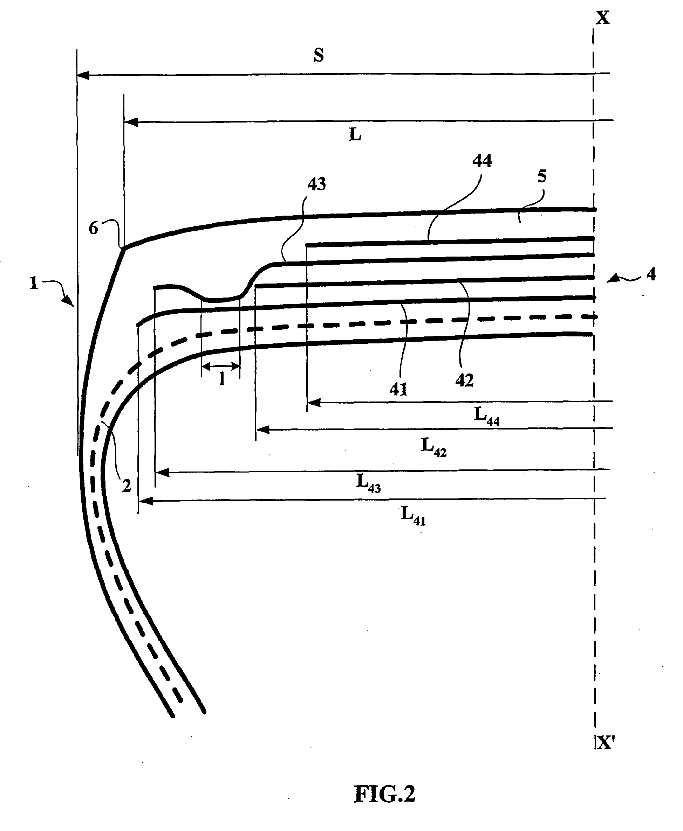

Sur la figure 2, le pneumatique 1 diffère de celui représenté sur la figure 1 en ce que les deux couches de travail 41 et 43 sont, de chaque côté du plan équatorial et axialement dans le prolongement de la couche d'éléments de renforcement circonférentiels 42, couplées sur une largeur axiale 1 : les câbles de la première couche de travail 41 et les câbles de la deuxième couche de travail 43, sur la largeur axiale de couplage 1 des deux couches, sont séparés radialement entre eux par une couche de gomme, dont l'épaisseur est minimale et correspond au double de l'épaisseur de la couche caoutchouteuse de calandrage des câbles métalliques 27.23 frettés dont est formée chaque couche de travail 41, 43, soit 0,8 mm. Sur la largeur restante commune aux deux couches de travail, les deux couches de travail 41, 43 sont séparés par un profilé de caoutchouc, non représenté sur la figure, l'épaisseur dudit profilé étant croissante en allant de l'extrémité axiale de la zone de couplage à l'extrémité de la couche de travail la moins large. Ledit profilé a avantageusement une largeur suffisante pour recouvrir radialement l'extrémité de la couche de travail 41 la plus large, qui est, dans ce cas la couche de travail radialement la plus proche de l'armature de carcasse.

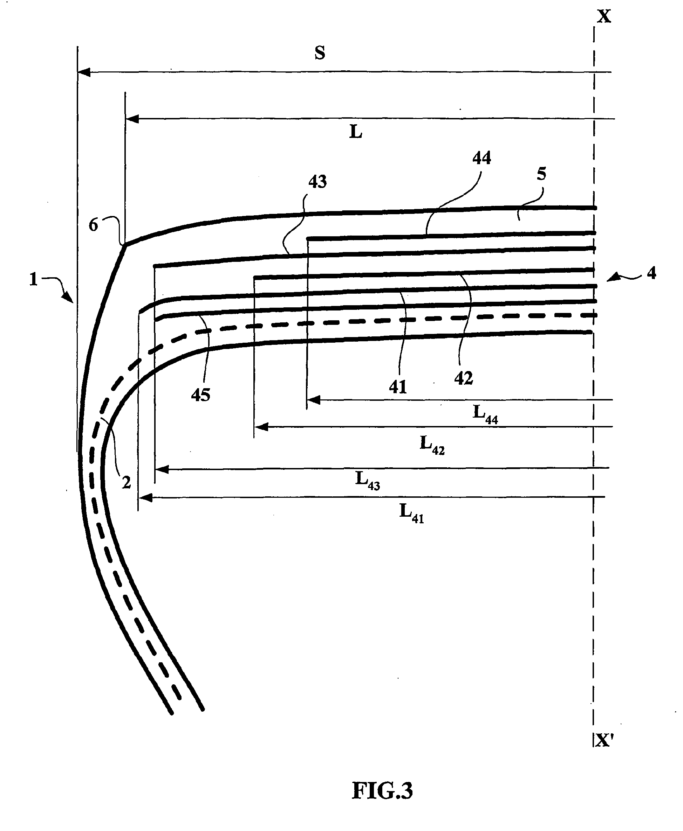

Sur la figure 3, le pneumatique 1 diffère de celui représenté sur la figure 1 en ce qu'il comporte une couche d'éléments de renforcement complémentaire 45, dite de triangulation, de largeur sensiblement égale à celle de la couche de travail 43. Les éléments de renforcement de cette couche 45 forment un angle d'environ 60° avec la direction circonférentielle et sont orientés dans le même sens que les éléments de renforcement de la couche de travail 41. Cette couche 41 permet notamment de contribuer à la reprise des efforts de compression transversale dont est l'objet l'ensemble des éléments de renforcement dans la zone du sommet du pneumatique.

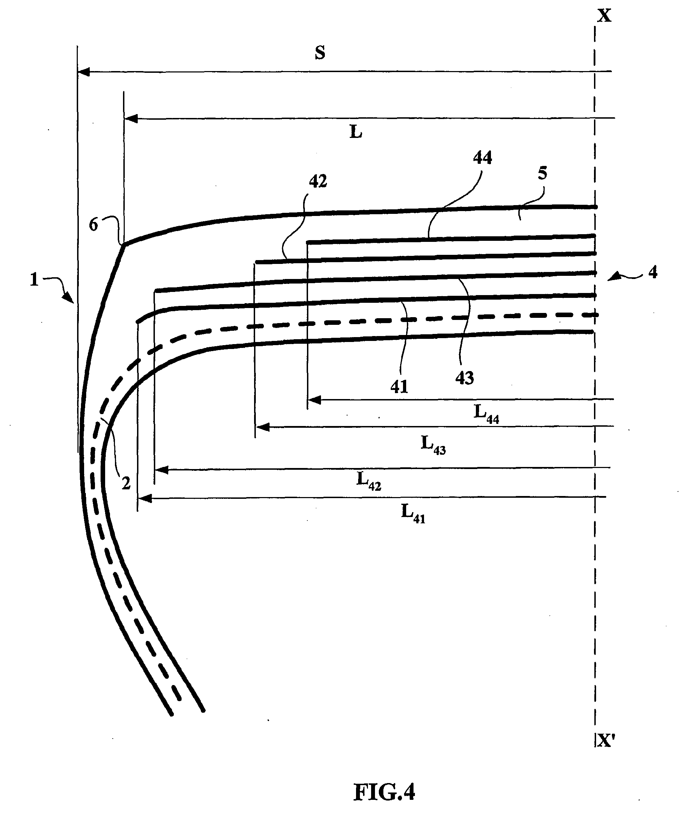

Sur la figure 4, le pneumatique 1 diffère de celui représenté sur la figure 1 en ce que la couche d'élément de renforcement circonférentiel est radialement extérieure aux couches de travail 41 et 43 et donc radialement adjacente à la couche de travail 43 axialement la plus étroite.

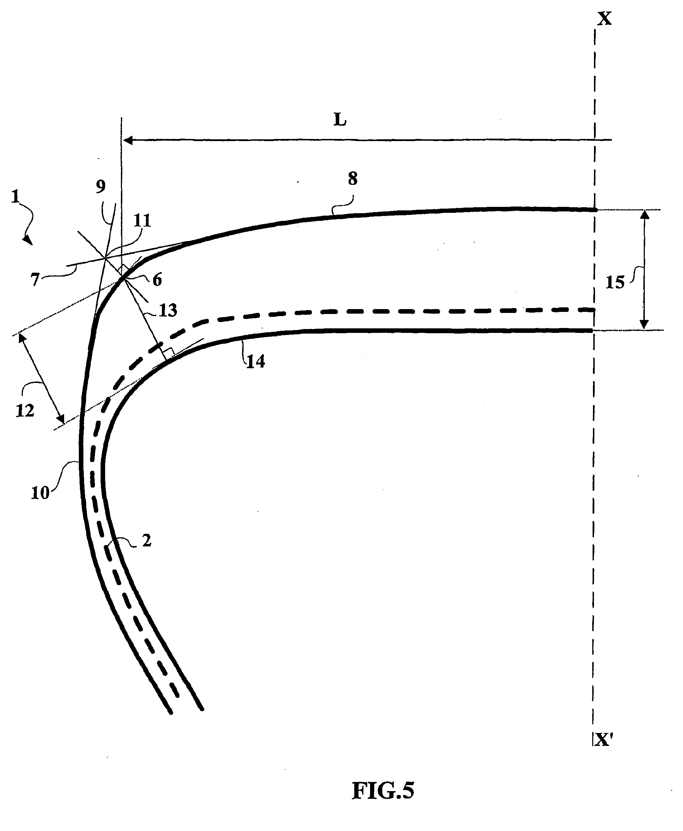

La figure 5 représente une vue méridienne d'un schéma d'un pneumatique 1 sur laquelle une première tangente 7 à la surface d'une extrémité axialement extérieure de la bande de roulement 8 ; la surface de la bande de roulement est définie par la surface radialement extérieure ou sommet des sculptures, non représentées sur les figures. Une seconde tangente 9 à la surface de l'extrémité radialement extérieure d'un flanc 10 coupe la première tangente 7 en un point 11. La projection orthogonale sur la surface extérieure du pneumatique définit l'extrémité d'épaulement 6.

La largeur axiale L de la bande de roulement est ainsi mesurée entre les deux extrémités d'épaulement 6.

Sur la figure 5 est encore indiquée la mesure de l'épaisseur du bloc sommet à une extrémité d'épaulement 6, définie par la longueur 12 de la projection orthogonale 13 de l'extrémité d'épaulement 6 sur la couche de mélange caoutchouteux 14 radialement la plus à l'intérieur du pneumatique.

La figure 5 montre encore la mesure de l'épaisseur du bloc sommet dans le plan médian circonférentiel XX', définie comme étant la distance 15 selon la direction radiale entre la tangente au sommet de la bande de roulement 8 dans le plan médian circonférentiel et la tangente au mélange caoutchouteux 14 radialement le plus à l'intérieur du pneumatique, dans le plan médian circonférentiel.

Des essais ont été réalisés avec le pneumatique réalisé selon l'invention conformément à la représentation de la figure 1 et comparés avec un pneumatique de référence identique mais réalisé selon une configuration usuelle.

Ce pneumatique usuel ne comporte notamment pas de couche intermédiaire d'éléments de renforcements circonférentiels entre les couches de sommet de travail dont les éléments de renforcement sont orientés d'un angle égal à 18° et dont la bande de roulement présente une largeur égale à 262 mm.

Les premiers essais d'endurance ont été réalisés en équipant des véhicules identiques avec chacun des pneumatiques et en faisant suivre des parcours en ligne droite à chacun des véhicules, les pneumatiques étant soumis à des charges supérieures à la charge nominale pour accélérer ce type de test.

Les véhicules sont associés à une charge par pneumatique de 4000 Kg en début de roulage et évolue pour atteindre une charge de 4750 Kg en fin de roulage.

Les essais ainsi réalisés ont montré que le véhicule équipé de pneumatiques selon l'invention a parcouru une distance supérieure de 42% à la distance parcourue par les véhicules de référence. Il apparaît donc que les pneumatiques selon l'invention sont nettement plus performants que les pneumatiques de référence alors qu'ils sont soumis à des contraintes de charge supérieure.

D'autres essais d'endurance ont été réalisés sur une machine de tests imposant une charge aux pneumatiques et un angle de dérive. Les essais ont été réalisés pour les pneumatiques selon l'invention avec une charge et un angle de dérive identiques à ceux appliqués aux pneumatiques de référence.

Les résultats obtenus montrent des gains en distance parcourus par les pneumatiques selon l'invention supérieur à 40 % par rapport à la distance parcourue par les pneumatiques de référence.

## Revendications

1. Pneumatique (1) à armature de carcasse radiale (2) comprenant une armature de sommet (4) formée d'au moins deux couches de sommet de travail (41, 43) d'éléments de renforcement inextensibles, croisés d'une couche à l'autre en faisant avec la direction circonférentielle des angles compris entre 10° et 45°, elle-même coiffée radialement d'une bande de roulement (5), ladite bande de roulement (5) étant réunie à deux bourrelets par l'intermédiaire de deux flancs, l'armature de sommet comportant au moins une couche (42) d'éléments de renforcement circonférentiels de largeur axiale (L₄₂) inférieure à celle (L₄₁, L₄₃) d'au moins une des couches de sommet de travail (41, 43), le rapport de la largeur axiale (L₄₂) d'au moins une couche (42) d'éléments de renforcement circonférentiels sur la largeur axiale L de la bande de roulement (5) est supérieur à 0,6 et de préférence supérieure à 0,65, **caractérisé en ce que** le rapport de la largeur axiale L de la bande de roulement (5) sur la largeur axiale maximale S du pneumatique (1) est strictement supérieur à 0,89.

2. Pneumatique (1) selon la revendication 1, **caractérisé en ce que** le rapport d'aspect H/S est strictement supérieur à 0,50

3. Pneumatique (1) selon l'une des revendications 1 ou 2, **caractérisé en ce que** la différence entre la largeur axiale (L₄₁) de la couche de sommet de travail (41) axialement la plus large et la largeur axiale (L₄₃) de la couche de sommet de travail (43) axialement la moins large est comprise entre 10 et 30 mm.

4. Pneumatique (1) selon l'une des revendications 1 à 3, **caractérisé en ce que** la couche de sommet de travail (41) axialement la plus large est radialement à l'intérieur des autres couches de sommet de travail (43).

5. Pneumatique (1) selon l'une des revendications 1 à 4, **caractérisé en ce qu'**au moins une couche (42) d'éléments de renforcement circonférentiels est disposée radialement entre deux couches de sommet de travail (41, 43).

6. Pneumatique (1) selon l'une des revendications 1 à 5, **caractérisé en ce que** les éléments de renforcement d'au moins une couche (42) d'éléments de renforcement circonférentiels sont des éléments de renforcement métalliques présentant un module sécant à 0,7 % d'allongement compris entre 10 et 120 GPa et un module tangent maximum inférieur à 150 GPa.

7. Pneumatique (1) selon la revendication 6, **caractérisé en ce que** le module sécant des éléments de renforcement à 0,7% d'allongement est inférieur à 100 Gpa, de préférence supérieur à 20 GPa et de préférence encore compris entre 30 et 90 GPa.

8. Pneumatique (1) selon l'une des revendications 6 ou 7, **caractérisé en ce que** le module tangent maximum des éléments de renforcement est inférieur à 130 GPa et de préférence inférieur à 120 GPa.

9. Pneumatique (1) selon l'une des revendications précédentes, **caractérisé en ce que** les éléments de renforcement d'au moins une couche (42) d'éléments de renforcement circonférentiels sont des éléments de renforcement métalliques présentant une courbe contrainte de traction en fonction de l'allongement relatif ayant des faibles pentes pour les faibles allongements et une pente sensiblement constante et forte pour les allongements supérieurs.

10. Pneumatique (1) selon l'une des revendications 1 à 5, **caractérisé en ce que** les éléments de renforcement d'au moins une couche (42) d'éléments de renforcement circonférentiels sont des éléments de renforcement métalliques coupés de manière à former des tronçons de longueur inférieure à la circonférence de la nappe la moins longue, mais supérieure à 0,1 fois ladite circonférence, les coupures entre tronçons étant axialement décalées les unes par rapport aux autres, le module d'élasticité à la traction par unité de largeur de la couche additionnelle étant de préférence inférieur au module d'élasticité à la traction, mesuré dans les mêmes conditions, de la couche de sommet de travail la plus extensible.

11. Pneumatique (1) selon l'une des revendications 1 à 5, **caractérisé en ce que** les éléments de renforcement d'au moins une couche (42) d'éléments de renforcement circonférentiels sont des éléments de renforcement métalliques ondulés, le rapport a/λ de l'amplitude d'ondulation a sur la longueur d'onde λ étant au plus égale à 0,09, le module d'élasticité à la traction par unité de largeur de la couche additionnelle étant de préférence inférieur au module d'élasticité à la traction, mesuré dans les mêmes conditions, de la couche de sommet de travail la plus extensible.

12. Pneumatique (1) selon l'une des revendications 5 à 11, au moins une couche (42) d'éléments de renforcement circonférentiels étant disposée radialement entre deux couches de sommet de travail (41, 43), **caractérisé en ce que** les largeurs axiales (L₄₁, L₄₃) des couches de sommet de travail (41, 43) radialement adjacentes à la couche (42) d'éléments de renforcement circonférentiels sont supérieures à la largeur axiale (L₄₂) de ladite couche (42) d'éléments de renforcement circonférentiels.

13. Pneumatique (1) selon la revendication 12, **caractérisé en ce que** les couches de sommet de travail (41, 43) adjacentes à la couche d'éléments de renforcement circonférentiels (42) sont de part et d'autre du plan équatorial XX' et dans le prolongement axial immédiat de la couche d'éléments de renforcement circonférentiels (42) couplées sur une largeur axiale 1, pour être ensuite découplées par des profilés de mélange de caoutchouc au moins sur le restant de la largeur commune aux dites deux couches de travail (41, 43).

14. Pneumatique (1) selon l'une des revendications précédentes, **caractérisé en ce que** l'angle formé avec la direction circonférentielle par les éléments de renforcement des couches de sommet de travail (41, 43) est inférieur à 30° et de préférence inférieur à 25°.

15. Pneumatique (1) selon l'une des revendications précédentes, **caractérisé en ce que** les couches de sommet de travail (41, 43) comportent des éléments de renforcement, croisés d'une nappe à l'autre, faisant avec la direction circonférentielle des angles variables selon la direction axiale.

16. Pneumatique (1) selon l'une des revendications précédentes, **caractérisé en ce que** l'armature de sommet (4) est complétée radialement à l'extérieur par au moins une nappe supplémentaire (44), dite de protection, d'éléments de renforcement dits élastiques, orientés par rapport à la direction circonférentielle avec un angle compris entre 10° et 45° et de même sens que l'angle formé par les éléments inextensibles de la nappe de travail (43) qui lui est radialement adjacente.

17. Pneumatique (1) selon l'une des revendications précédentes, **caractérisé en ce que** l'armature de sommet (4) comporte en outre une couche de triangulation (45) formée d'éléments de renforcement métalliques faisant avec la direction circonférentielle des angles supérieurs à 60°.

## Claims

1. A tyre (1) having a radial carcass reinforcement (2) comprising a crown reinforcement (4) formed of at least two working crown layers (41, 43) of inextensible reinforcement elements, which are crossed from one layer to the other, forming with the circumferential direction angles of between 10° and 45°, which itself is topped radially by a tread (5), said tread (5) being joined to two beads by means of two sidewalls, the crown reinforcement comprising at least one layer (42) of circumferential reinforcement elements of an axial width (L₄₂) less than that (L₄₁, L₄₃) of at least one of the working crown layers (41, 43), the ratio of the axial width (L₄₂) of at least one layer (42) of circumferential reinforcement elements to the axial width L of the tread (5) being greater than 0,6, and preferably greater than 0,65, **characterised in that** the ratio of the axial width L of the tread (5) to the maximum axial width S of the tyre (1) is strictly greater than 0,89.

2. A tyre (1) according to Claim 1, **characterised in that** the aspect ratio H/S is strictly greater than 0,50.

3. A tyre (1) according to one of Claims 1 or 2, **characterised in that** the difference between the axial width (L₄₁) of the axially widest working crown layer (41) and the axial width (L₄₃) of the axially least wide working crown layer (43) is between 10 and 30 mm.

4. A tyre (1) according to one of Claims 1 to 3, **characterised in that** the axially widest working crown layer (41) is radially to the inside of the other working crown layers (43).

5. A tyre (1) according to one of Claims 1 to 4, **characterised in that** at least one layer (42) of circumferential reinforcement elements is arranged radially between two working crown layers (41, 43).

6. A tyre (1) according to one of Claims 1 to 5, **characterised in that** the reinforcement elements of at least one layer (42) of circumferential reinforcement elements are metallic reinforcement elements having a secant modulus at 0,7% elongation of between 10 and 120 GPa and a maximum tangent modulus of less than 150 GPa.

7. A tyre (1) according to Claim 6, **characterised in that** the secant modulus of the reinforcement elements at 0,7% elongation is less than 100 GPa, preferably greater than 20 GPa and more preferably still of between 30 and 90 GPa.

8. A tyre (1) according to one of Claims 6 or 7, **characterised in that** the maximum tangent modulus of the reinforcement elements is less than 130 GPa and preferably less than 120 GPa.

9. A tyre (1) according to one of the preceding claims, **characterised in that** the reinforcement elements of at least one layer (42) of circumferential reinforcement elements are metallic reinforcement elements having a curve of tensile stress as a function of the relative elongation having shallow gradients for the low elongations and a substantially constant, steep gradient for the higher elongations.

10. A tyre (1) according to one of Claims 1 to 5, **characterised in that** the reinforcement elements of at least one layer (42) of circumferential reinforcement elements are metallic reinforcement elements cut so as to form sections of a length less than the circumference of the least long ply, but greater than 0,1 times said circumference, the cuts between sections being axially offset from each other, the modulus of elasticity in tension per unit of width of the additional layer preferably being less than the modulus of elasticity in tension, measured under the same conditions, of the most extensible working crown layer.

11. A tyre (1) according to one of Claims 1 to 5, **characterised in that** the reinforcement elements of at least one layer (42) of circumferential reinforcement elements are undulating metallic reinforcement elements, the ratio a/λ of the amplitude of undulation to the wavelength λ being at most equal to 0,09, the modulus of elasticity in tension per unit of width of the additional layer preferably being less than the modulus of elasticity in tension, measured under the same conditions, of the most extensible working crown layer.

12. A tyre (1) according to one of Claims 5 to 11, at least one layer (42) of circumferential reinforcement elements being arranged radially between two working crown layers (41, 43), **characterised in that** the axial widths (L₄₁, L₄₃) of the working crown layers (41, 43) radially adjacent to the layer (42) of circumferential reinforcement elements are greater than the axial width (L₄₂) of said layer (42) of circumferential reinforcement elements.

13. A tyre (1) according to Claim 12, **characterised in that** the working crown layers (41, 43) adjacent to the layer (42) of circumferential reinforcement elements, on either side of the equatorial plane and in the immediate axial extension of the layer (42) of circumferential reinforcement elements, are coupled over an axial width 1, then being decoupled by profiled elements of rubber mix at least over the remainder of the width common to said two working layers (41, 43).

14. A tyre (1) according to one of the preceding claims, **characterised in that** the angle formed with the circumferential direction by the reinforcement elements of the working crown layers (41, 43) is less than 30° and preferably less than 25°.

15. A tyre (1) according to one of the preceding claims, **characterised in that** the working crown layers (41, 43) comprise reinforcement elements, crossed from one ply to the other, forming with the circumferential direction angles which are variable in the axial direction.

16. A tyre (1) according to one of the preceding claims, **characterised in that** the crown reinforcement (4) is finished off radially to the outside by at least one supplementary layer (44), referred to as a protective layer, of what are called elastic reinforcement elements, which are oriented relative to the circumferential direction at an angle of between 10° and 45° and of the same direction as the angle formed by the inextensible elements of the working layer (43) which is radially adjacent thereto.

17. A tyre (1) according to one of the preceding claims, **characterised in that** the crown reinforcement furthermore comprises a triangulation layer (45) formed of metallic reinforcement elements forming angles greater than 60° with the circumferential direction.

## Patentansprüche

1. Reifen (1) mit radialer Karkassenbewehrung (2), umfassend eine Scheitelbewehrung (4), geformt aus mindestens zwei Arbeitsscheitellagen (41, 43) aus nicht dehnbaren Verstärkungselementen, die von einer Lage zur anderen verschränkt sind, indem sie zur Umfangsrichtung Winkel zwischen 10° und 45° bilden, die ihrerseits radial von einer Lauffläche (5) bedeckt ist, wobei diese Lauffläche (5) durch zwei Flanken mit zwei Wülsten verbunden ist, die Scheitelbewehrung mindestens eine Lage (42) Umfangsverstärkungselemente aufweist, deren axiale Breite (L₄₂) kleiner ist als die (L₄₁, L₄₃) mindestens einer der Arbeitsscheitellagen (41, 43), das Verhältnis der axialen Breite (L₄₂) mindestens einer Lage (42) Umfangsverstärkungselemente zur axialen Breite L der Lauffläche (5) größer ist als 0,6 und bevorzugt größer ist als 0,65, **dadurch gekennzeichnet, dass** das Verhältnis der axialen Breite L der Lauffläche (5) zur maximalen axialen Breite S des Reifens (1) stets größer ist als 0,89.

2. Reifen (1) nach Anspruch 1, **dadurch gekennzeichnet, dass** das Aspektverhältnis H/S stets größer als 0,50 ist.

3. Reifen (1) nach einem der Ansprüche 1 oder 2, **dadurch gekennzeichnet, dass** die Differenz zwischen der axialen Breite (L₄₁) der Arbeitsscheitellage (41), die axial die breiteste ist, und der axialen Breite (L₄₃) der Arbeitsscheitellage (43), die axial die am wenigsten breite ist, zwischen 10 und 30 mm beträgt.

4. Reifen (1) nach einem der Ansprüche 1 bis 3, **dadurch gekennzeichnet, dass** die Arbeitsscheitellage (41), die axial die breiteste ist, radial innerhalb der anderen Arbeitsscheitellagen (43) liegt.

5. Reifen (1) nach einem der Ansprüche 1 bis 4, **dadurch gekennzeichnet, dass** mindestens eine Lage (42) Umfangsverstärkungselemente radial zwischen den zwei Arbeitsscheitellagen (41, 43) angeordnet ist.

6. Reifen (1) nach einem der Ansprüche 1 bis 5, **dadurch gekennzeichnet, dass** die Verstärkungselemente mindestens einer Lage (42) Umfangsverstärkungselemente metallene Verstärkungselemente sind, die ein Sekantenmodul bei 0,7 % Dehnung zwischen 10 und 120 GPa und ein maximales Tangentenmodul kleiner als 150 GPa aufweisen.

7. Reifen (1) nach Anspruch 6, **dadurch gekennzeichnet, dass** das Sekantenmodul der Verstärkungselemente bei 0,7 % Dehnung kleiner ist als 100 GPa, bevorzugt größer ist als 20 GPa und bevorzugt auch zwischen 30 und 90 GPa liegt.

8. Reifen (1) nach einem der Ansprüche 6 oder 7, **dadurch gekennzeichnet, dass** das maximale Tangentenmodul der Verstärkungselemente kleiner als 130 GPa und bevorzugt kleiner als 120 GPa ist.

9. Reifen (1) nach einem der vorherigen Ansprüche, **dadurch gekennzeichnet, dass** die Verstärkungselemente mindestens einer Lage (42) Umfangsverstärkungselemente metallene Verstärkungselemente sind, die eine Zugspannungskurve abhängig von der relativen Dehnung haben, die bei kleinen Dehnungen geringe Steigungen und bei den größeren Dehnungen eine im Wesentlichen konstante und starke Steigung aufweist.

10. Reifen (1) nach einem der Ansprüche 1 bis 5, **dadurch gekennzeichnet, dass** die Verstärkungselemente mindestens einer Lage (42) Umfangsverstärkungselemente metallene Verstärkungselemente sind, die so zugeschnitten sind, dass sie Abschnitte formen, deren Länge kleiner ist als der kürzeste Umfang der Lage, aber größer als das 0,1-Fache dieses Umfangs, wobei die Zuschnitte zwischen Abschnitten relativ zueinander axial versetzt sind, das Zugelastizitätsmodul pro Breiteneinheit der Zusatzlage bevorzugt kleiner ist als das unter gleichen Bedingungen gemessene Zugelastizitätsmodul der dehnbarsten Lage des Arbeitsscheitels.

11. Reifen (1) nach einem der Ansprüche 1 bis 5, **dadurch gekennzeichnet, dass** die Verstärkungselemente mindestens einer Lage (42) Umfangsverstärkungselemente gewellte metallene Verstärkungselemente sind, das Verhältnis a/λ der Welligkeitsamplitude a zur Wellenlänge λ höchstens gleich 0,09 ist, das Zugelastizitätsmodul pro Breiteneinheit der Zusatzlage bevorzugt kleiner ist als das unter gleichen Bedingungen gemessene Zugelastizitätsmodul der dehnbarsten Lage des Arbeitsscheitels.

12. Reifen (1) nach einem der Ansprüche 5 bis 11, wobei mindestens eine Lage (42) Umfangsverstärkungselemente axial zwischen zwei Arbeitsscheitellagen (41, 43) angeordnet ist, **dadurch gekennzeichnet, dass** die axialen Breiten (L₄₁, L₄₃) der Arbeitsscheitellagen (41, 43) radial benachbart zur Lage (42) Umfangsverstärkungselemente größer sind als die axiale Breite (L₄₂) dieser Lage (42) Umfangsverstärkungselemente.

13. Reifen (1) nach Anspruch 12, **dadurch gekennzeichnet, dass** die Arbeitsscheitellagen (41, 43) benachbart zur Lage (42) Umfangsverstärkungselemente beiderseits der Äquatorebene XX' und in der direkten axialen Verlängerung der Lage (42) Umfangsverstärkungselemente auf einer axialen Breite 1 gekoppelt sind, um dann mindestens auf dem Rest der gemeinsamen Breite der zwei Arbeitsscheitellagen (41, 43) durch Profile aus Gummimischung entkoppelt zu werden.

14. Reifen (1) nach einem der vorherigen Ansprüche, **dadurch gekennzeichnet, dass** der Winkel, der von den Verstärkungselementen der Arbeitsscheitellagen (41, 43) zur Umfangsrichtung gebildet wird, kleiner als 30° und bevorzugt kleiner als 25° ist.

15. Reifen (1) nach einem der vorherigen Ansprüche, **dadurch gekennzeichnet, dass** die Arbeitsscheitellagen (41, 43) Verstärkungselemente umfassen, die von einer Lage zur anderen verschränkt sind und je nach Axialrichtung variable Winkel zur Umfangsrichtung bilden.

16. Reifen (1) nach einem der vorherigen Ansprüche, **dadurch gekennzeichnet, dass** die Scheitelbewehrung (4) radial außen durch mindestens eine zusätzliche Lage (44), Schutzlage genannt, mit sogenannten elastischen Verstärkungselementen ergänzt ist, die relativ zur Umfangsrichtung in einem Winkel zwischen 10° und 45° orientiert sind, und in der gleichen Richtung wie der Winkel, der von den nicht dehnbaren Elementen der Arbeitslage (43) gebildet wird, die zu ihr radial benachbart ist.

17. Reifen (1) nach einem der vorherigen Ansprüche, **dadurch gekennzeichnet, dass** die Scheitelbewehrung (4) außerdem eine Triangulationslage (45) umfasst, die aus metallenen Verstärkungselementen geformt ist, die zur Umfangsrichtung Winkel größer als 60° bilden.
